# FASCICULE DE BREVET EUROPEEN

(11) **EP 2 392 798 B1**
(45) Date de publication et mention de la délivrance du brevet: **10.04.2013**
(21) Numéro de dépôt: 11305664.2
(22) Date de dépôt: 31.05.2011
(51) Int. Cl.: F02C 7/224, B64D 33/08, F28F 19/00

(54) **Aéronef comportant un dispositif de préchauffage pour un échangeur thermique fluide/fluide**
Flugzeug mit einem Vorwärmer für einen Flüssigkeit/Flüssigkeit Wärmetauscher
Aircraft with a preheating device for a fluid/fluid heat exchanger thereof

(30) Priorité: 04.06.2010 FR 1054392
(43) Date de publication de la demande: 07.12.2011
(73) Titulaire: Airbus Opérations SAS, 31060 Toulouse (FR); Airbus SAS, 31700 Blagnac (FR)
(72) Inventeur: Guillaume, Pierre, 31200 TOULOUSE (FR); Lair, Patrick, 31530 LASSERRE (FR)
(74) Mandataire: Fantin, Laurent

(56) Documents cités:
- EP-A2- 1 061 243
- FR-A1- 2 318 314
- US-A- 2 055 549
- US-A- 4 151 710
- US-A- 4 773 212
- US-A- 5 435 155

## Description

La présente invention se rapporte à un dispositif de préchauffage pour un échangeur thermique fluide/fluide d'un aéronef, plus particulièrement pour un échangeur carburant/huile d'une motorisation d'aéronef.

Un aéronef comprend une cellule et au moins un ensemble propulsif. Selon un mode de réalisation largement répandu, un ensemble propulsif est suspendu sous une aile par l'intermédiaire d'un mât, Plus généralement, l'ensemble propulsif est relié à la cellule par l'intermédiaire d'un mât.

Un ensemble propulsif comprend une turbomachine équipée d'un circuit de refroidissement moteur, dans lequel circule un fluide caloporteur (ou fluide de refroidissement), notamment de l'huile.

La turbomachine est alimentée en carburant par l'intermédiaire d'un circuit de carburant s'étendant depuis un réservoir disposé au niveau de la cellule.

Dans certains cas, on peut utiliser plusieurs sources de refroidissement pour refroidir l'huile de la turbomachine, et notamment un échangeur carburant/huile au niveau du circuit de refroidissement moteur et utiliser le carburant comme fluide caloporteur afin de refroidir l'huile de la turbomachine.

Cet agencement est notamment décrit dans la demande de brevet FR-2.936.224 qui propose un procédé utilisant le carburant comme fluide caloporteur entre la cellule et l'ensemble propulsif.

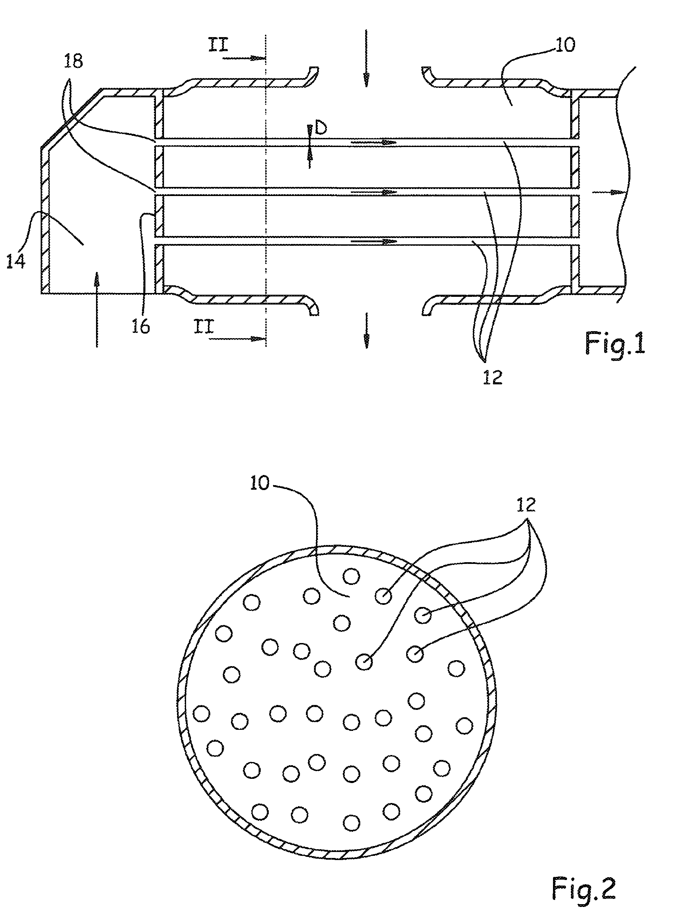

Selon un mode de réalisation illustré sur la figure 1, un échangeur comprend au moins une chambre 10 dans laquelle circule de l'huile et une pluralité de conduits 12 dans lesquels circule le carburant et qui traversent ladite chambre 10. Dans ce cas, la face intérieure des conduits 12 est en contact avec le carburant alors que la face extérieure desdits conduits est en contact avec l'huile. Ces conduits sont sensiblement rectilignes et ont un diamètre constant D. Cet échangeur comprend également en amont un conduit d'alimentation en carburant 14 susceptible d'être relié à une canalisation non représentée.

La chambre 10 est séparée du conduit par une plaque 16 comprenant une pluralité d'orifices 18 avec une section constante et égale à D qui coopèrent chacun avec un conduit 12.

Dans certaines conditions de vol, il peut apparaître des éléments solides sous forme de cristaux de glace dans le carburant qui peuvent avoir des dimensions importantes les empêchant de pénétrer dans les conduits 12 via les orifices 18. Ainsi, la face de la plaque 16 orientée vers le conduit d'alimentation en carburant 14 est potentiellement une zone au niveau de laquelle peuvent s'accumuler des cristaux de glace risquant de limiter le débit du carburant en direction de la motorisation.

Le document FR-2.318.314 prévoit un second échangeur pour préchauffer le carburant afin de limiter l'accumulation des cristaux de glace dans le premier échangeur. Toutefois, les risques d'accumulation de cristaux de glace sont reportés au niveau du second échangeur.

Aussi, la présente invention vise à pallier aux inconvénients de l'art antérieur en proposant un dispositif pour un échangeur carburant/huile permettant de limiter les risques d'obturation des conduits d'écoulement du carburant.

A cet effet, l'invention a pour objet un aéronef selon la revendication 1 comprenant un échangeur thermique entre d'une part un premier fluide s'écoulant dans des conduits étroits dudit échangeur et susceptible de contenir des éléments solides aptes à fondre, et d'autre part, un second fluide à refroidir, caractérisé en ce qu'il comprend un dispositif de préchauffage du premier fluide en amont des conduits de l'échangeur, comprenant une pluralité de conduits disposés dans au moins un plan sécant à la direction d'écoulement du premier fluide, l'espacement entre deux conduits adjacents étant adapté pour retenir les éléments solides de grandes dimensions et ne les laisser passer que lorsqu'ils ont fondu au moins partiellement.

D'autres caractéristiques et avantages ressortiront de la description qui va suivre de l'invention, description donnée à titre d'exemple uniquement, en regard des dessins annexés sur lesquels :
- la figure 1 est un schéma illustrant un échangeur carburant/huile selon l'art antérieur,
- la figure 2 est une coupe selon la ligne II-II de la figure 1 d'un échangeur,
- la figure 3 est un schéma frustrant des moyens de préchauffage du carburant en entrée d'échangeur selon l'invention,
- la figure 4 est une coupe illustrant la section d'entrée d'un conduit pour le carburant d'un échangeur selon l'invention, et

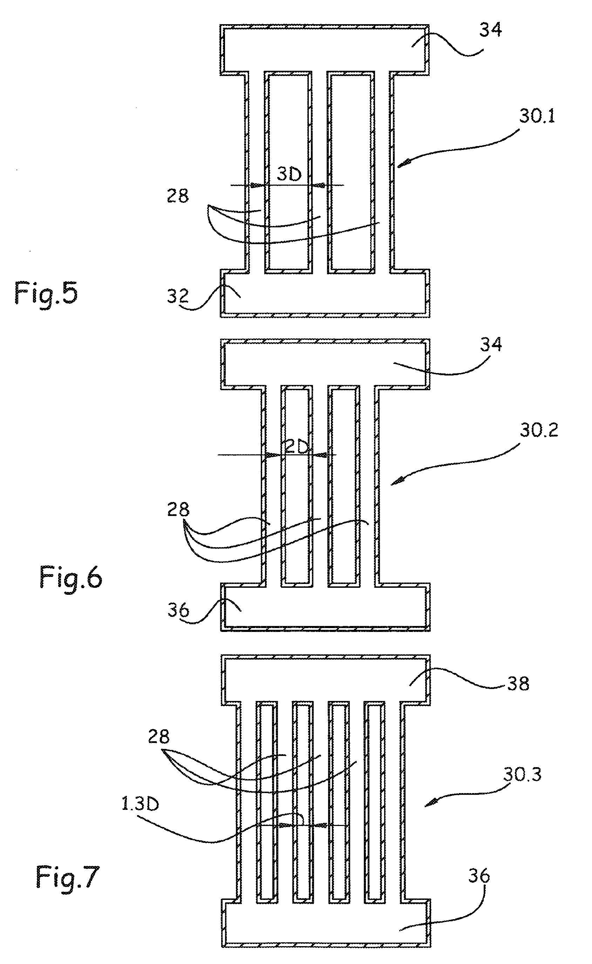

- les figures 5 à 7 sont des schémas de différents étages des moyens de préchauffage du carburant selon l'invention,

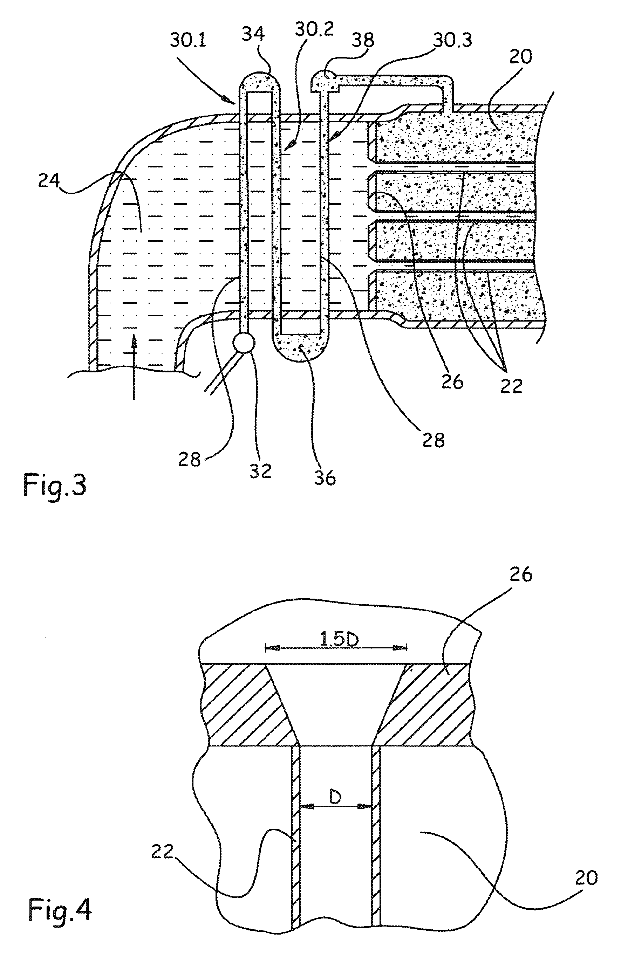

Sur la figure 3, on a représenté de manière schématique seulement une partie d'un échangeur thermique entre deux fluides, notamment entre du carburant et de l'huile. Ce dernier comprend une chambre 20 dans laquelle s'écoule l'huile traversée par des conduits 22 dans lesquels s'écoule le carburant. Pour favoriser les échanges thermiques, l'échangeur comprend un grand nombre de conduits étroits.

selon un mode de réalisation, les conduits ont une section circulaire de diamètre D.

Cet échangeur est plus particulièrement destiné à une motorisation d'un aéronef, le carburant étant destiné à la motorisation de l'aéronef et l'huile à la refroidir. Toutefois, il n'est pas limité à l'huile et au carburant et peut convenir à deux fluides, l'un des fluides circulant dans des conduits étroits d'un échangeur pouvant contenir des éléments solides susceptibles de fondre à la manière de cristaux de glace.

Les entrées et sorties de l'huile et la sortie du carburant ne sont pas plus décrites car elles sont connues de l'homme du métier et peuvent être identiques à celles des échangeurs de l'art antérieur.

Cet échangeur comprend en amont au moins un conduit d'alimentation 24 en carburant se divisant en une pluralité de conduits 22. Selon un mode de réalisation, l'échangeur comprend une plaque 26 séparant le conduit d'alimentation 24 et la chambre 20 destinée à l'huile, ladite plaque comprenant une pluralité d'orifices qui coopèrent chacun avec un conduit 22. La liaison entre la plaque 26 et les conduits 22 n'est pas plus décrite car elle peut être réalisée de la même manière que selon les échangeurs de l'art antérieur.

selon Invention, le circuit de carburant comprend un dispositif de préchauffage en amont des conduits 22 afin de limiter la présence dans le carburant d'éléments solides aptes à fondre de grandes dimensions qui risquent de s'accumuler en entrée ou dans les conduits 22 de l'échangeur.

A titre d'exemple, les éléments solides susceptibles de fondre présents dans le carburant peuvent être des cristaux de glace. Toutefois, invention n'est pas imitée à ce type d'éléments solides susceptibles de fondre.

Avantageusement, le dispositif de préchauffage est disposé au niveau du conduit d'alimentation 24 de l'échangeur.

Selon l'invention, le dispositif de préchauffage comprend au moins un circuit dit de préchauffage dans lequel circule un fluide caloporteur dont la température permet de faire fondre les cristaux de glace, ledit circuit comprenant au moins une paroi séparant le carburant à réchauffer et ledit fluide caloporteur.

selon l'invention, un circuit de préchauffage comprend dans le conduit d'alimentation 24 une pluralité de conduits 28 espacés entre eux dans lesquels circule un fluide caloporteur. Les conduits 48 peuvent avoir différentes formes de section. Ainsi, ils peuvent être circulaires ou être très minces.

De préférence, le fluide caloporteur est de l'huile destinée à traverser l'échangeur. Ainsi, l'huile chaude qui est refroidie dans l'échangeur par le carburant est utilisée pour préchauffer le carburant en amont de l'échangeur. De préférence, les conduits 28 sont rectilignes. Les conduits 28 sont disposés dans un plan sécant à la direction d'écoulement du carburant dans le conduit d'alimentation 24. Selon les cas, les conduits peuvent être disposés dans un même plan ou dans plusieurs plans.

L'espacement entre deux conduits adjacents est adapté pour retenir les cristaux de glace de grandes dimensions et ne les laisser passer que lorsqu'ils ont fondu au moins partiellement et que les risques qu'ils s'accumulent de manière préjudiciable en amont des conduits 22 ou dans ces derniers sont limités, de façon à ne pas perturber le fonctionnement de la motorisation de l'aéronef. Avantageusement, le circuit de préchauffage comprend au moins deux séries de conduits 28, une première série 30.1 avec des conduits distants entre eux d'une distance D1, une deuxième série 30.2 avec des conduits distants entre eux d'une distance D2, une troisième série 30.3 avec des conduits distants entre eux d'une distance D3, ainsi de suite.

Les conduits d'une même série sont parallèles entre eux et sont disposés dans au moins un plan sensiblement sécant à la direction d'écoulement du carburant dans le conduit d'alimentation 24. Les conduits d'une même série peuvent être disposés dans un même plan sécant à la direction d'écoulement du carburant dans le conduit d'alimentation 24 ou dans plusieurs plans.

Selon une autre caractéristique de l'invention, l'espacement entre les conduits diminue d'une série à l'autre selon le sens d'écoulement du carburant. Ainsi, D1 est supérieur à D2 qui est lui-même supérieur à D3 et ainsi de suite. De la sorte chaque série constitue un crible apte à retenir les cristaux de glace, la taille des cristaux de glace retenus diminuant au fur et à mesure qu'ils approchent des conduits 22 de l'échangeur.

Cet agencement permet de limiter les risques d'obturation même au niveau des séries de conduits 28 prévus pour le préchauffage du carburant. Avantageusement, le diamètre D1 est inférieur ou égal à approximativement 3D, et de préférence supérieur ou égal à 2D, le diamètre D2 est inférieur ou égal à approximativement 2D, et de préférence supérieur ou égal à 1,3D et le diamètre D3 est inférieur ou égal à approximativement 1,3D, et de préférence supérieur ou égal à D.

Selon un mode de réalisation, les conduits 28 de la première série 30.1 sont alimentés par une nourrice 32 qui répartit l'huile dans tous les conduits 28 de la première série. En suivant, les conduits 28 de la première série 30.1 sont reliés aux conduits de la deuxième série 30.2 par un collecteur/répartiteur 34, les conduits 28 de la deuxième série 30.2 étant reliés aux conduits 28 de la troisième série par un collecteur/répartiteur 36. Enfin, les conduits de la dernière série, à l'occurrence ceux de la troisième série 30.3, débouchent dans un collecteur 38 relié à l'entrée de l'huile dans l'échangeur.

Selon un autre aspect de l'invention, les extrémités des conduits 22 de l'échangeur ou les orifices de la plaque 26 sont tronconiques et évasés en direction du conduit d'alimentation 24.

Selon un mode de réalisation, la section la plus large des conduits ou des orifices a un diamètre de l'ordre de 1,5D.

selon un autre point de l'invention, l'entraxe entre deux conduits adjacents est inférieur ou égal à 2,5D, soit un espacement entre deux sections les plus larges de deux conduits adjacents inférieur ou égal à D.

Ces agencements au niveau des extrémités des conduits de l'échangeur ou de la plaque 26 de l'échangeur contribuent à limiter les risques d'accumulation de cristaux de glace.

## Revendications

1. Aéronef comprenant un échangeur thermique entre d'une part un premier fluide s'écoulant dans des conduits (22) étroits dudit échangeur et susceptible de contenir des éléments solides aptes à fondre, et d'autre part, un second fluide à refroidir, **caractérisé en ce qu'**il comprend un dispositif de préchauffage du premier fluide en amont des conduits (22) de l'échangeur, **caracterisé en ce que** le dispositif de préchauffage comprend une pluralité de conduits (28) disposés dans au moins un plan sécant à la direction d'écoulement du premier fluide, l'espacement entre deux conduits adjacents étant adapté de manière à former un crible apte à retenir les éléments solides de grandes dimensions et ne les laisser passer que lorsqu'ils ont fondu au moins partiellement.

2. Aéronef selon la revendication 1, **caractérisé en ce que** le dispositif de préchauffage est disposé au niveau d'un conduit d'alimentation (24) en premier fluide de l'échangeur.

3. Aéronef selon la revendication 1 ou 2, **caractérisé en ce que** le fluide caloporteur du dispositif de préchauffage est le second fluide à refroidir de l'échangeur.

4. Aéronef selon l'une quelconque des revendications précédentes, **caractérisé en ce qu'**un circuit de préchauffage comprend au moins deux séries de conduits (28), l'espacement entre lesdits conduits (28) diminuant d'une série à l'autre selon le sens d'écoulement du premier fluide.

5. Aéronef selon la revendication 4, **caractérisé en ce qu'**un circuit de préchauffage comprend une première série (30.1) de conduits (28) avec un espacement entre eux D1 inférieur ou égal à approximativement 3 fois le diamètre des conduits (22) de l'échangeur et une deuxième série (30.2) de conduits (28) avec un espacement entre eux D2 inférieur ou égal à 2 fois le diamètre des conduits (22) de l'échangeur.

6. Aéronef selon la revendication 5, **caractérisé en ce qu'**un circuit de préchauffage comprend une troisième série (30.3) de conduits (28) avec un espacement entre eux D3 inférieur ou égal à approximativement 1,3 fois le diamètre des conduits (22) de l'échangeur.

7. Aéronef selon l'une quelconque des revendications précédentes, comprenant un échangeur avec une plaque (26) séparant une enceinte (10) contenant le second fluide et un conduit d'alimentation (24) en premier fluide, ladite plaque comportant une pluralité d'orifices coopérant chacun avec un conduit (22) de l'échangeur, **caractérisé en ce que** les extrémités des conduits (22) de l'échangeur ou les orifices de la plaque (26) sont évasés en direction du conduit d'alimentation (24).

8. Aéronef selon la revendication 7, **caractérisé en ce que** la section la plus large des conduits (22) de l'échangeur ou des orifices de la plaque (26) a un diamètre de l'ordre de 1,5 D.

## Claims

1. Aircraft that comprises a heat exchanger between, on the one hand, a first fluid that flows into the narrow pipes (22) of said exchanger and that is able to contain solid elements that can melt, and, on the other hand, a second fluid to be cooled, **characterized in that** it comprises a device for preheating the first fluid upstream from the pipes (22) of the exchanger and **in that** the device for preheating, comprises a number of pipes (28) arranged in at least one plane that is secant to the direction of flow of the first fluid, whereby the spacing between two adjacent pipes being adapted to form a screen adapted for retaining the solid elements of large dimensions and for allowing them to pass only when they have melted at least partially.

2. Aircraft according to Claim 1, wherein the preheating device is arranged at the level of a pipe (24) for supply of the first fluid of the exchanger.

3. Aircraft according to Claim 1 or 2, wherein the coolant of the preheating device is the second fluid to be cooled from the exchanger.

4. Aircraft according to any of the preceding claims, wherein a preheating circuit comprises at least two series of pipes (28), whereby the spacing between said pipes (28) decreases from one series to the next in the direction of flow of the first fluid.

5. Aircraft according to Claim 4, wherein a preheating circuit comprises a first series (30.1) of pipes (28) with a spacing D1 between them that is less than or equal to approximately three times the diameter of the pipes (22) of the exchanger and a second series (30.2) of pipes (28) with a spacing D2 between them that is less than or equal to two times the diameter of the pipes (22) of the exchanger.

6. Aircraft according to Claim 5, wherein a preheating circuit comprises a third series (30.3) of pipes (28) with a spacing D3 between them that is less than or equal to approximately 1.3 times the diameter of the pipes (22) of the exchanger.

7. Aircraft according to any of the preceding claims, comprising an exchanger with a plate (26) that separates a chamber (10) that contains the second fluid and a pipe (24) for supply of a first fluid, whereby said plate comprises a number of openings that each work with a pipe (22) of the exchanger, wherein the ends of the pipes (22) of the exchanger or the openings of the plate (26) are flared in the direction of the supply pipe (24).

8. Aircraft according to Claim 7, wherein the widest cross-section of the pipes (22) of the exchanger or openings of the plate (26) has a diameter on the order of 1.5 D.

## Patentansprüche

1. Flugzeug mit einem Wärmetauscher zwischen einerseits einem ersten Fluid, das in engen Leitungen (22) des Wärmetauschers strömt und unter Umständen schmelzbare feste Elemente enthält, und andererseits einem abzukühlenden zweiten Fluid, **dadurch gekennzeichnet, dass** das Flugzeug einen Vorwärmer für das erste Fluid im Zulauf zu den Leitungen (22) des Wärmetauschers aufweist, **dadurch gekennzeichnet, dass** der Vorwärmer eine Vielzahl von Leitungen (28) aufweist, die in wenigstens einer die Strömungsrichtung des ersten Fluids schneidenden Ebene angeordnet sind, wobei der Abstand zwischen zwei nebeneinander liegenden Leitungen dazu eingerichtet ist, ein Sieb zu bilden, das sich dazu eignet, feste Elemente mit großen Abmessungen zurückzuhalten und diese nicht hindurchzulassen bis sie wenigstens teilweise geschmolzen sind.

2. Flugzeug nach Anspruch 1, **dadurch gekennzeichnet, dass** der Vorwärmer im Bereich einer Zufuhrleitung (24) im ersten Fluid des Wärmetauschers angeordnet ist.

3. Flugzeug nach Anspruch 1 oder 2, **dadurch gekennzeichnet, dass** das Wärme übertragende Fluid des Wärmetauschers das abzukühlende zweite Fluid des Wärmetauschers ist.

4. Flugzeug nach einem der vorhergehenden Ansprüche,
**dadurch gekennzeichnet, dass** ein Vorwärmkreis mindestens zwei Reihen von Leitungen (28) aufweist, wobei sich der Abstand zwischen den Leitungen (28) in Strömungsrichtung des ersten Fluids von Reihe zu Reihe verringert.

5. Flugzeug nach Anspruch 4, **dadurch gekennzeichnet, dass** ein Vorwärmkreis eine erste Reihe (30.1) von Leitungen (28) mit einem Abstand D1 untereinander kleiner gleich dem etwa 3-fachen des Durchmessers der Leitungen (22) des Wärmetauschers aufweist, und eine zweite Reihe (30.2) von Leitungen (28) mit einem Abstand D2 untereinander kleiner gleich dem 2-fachen des Durchmessers der Leitungen (22) des Wärmetauschers.

6. Flugzeug nach Anspruch 5, **dadurch gekennzeichnet, dass** ein Vorwärmkreis eine dritte Reihe (30.3) von Leitungen (28) mit einem Abstand D3 untereinander kleiner gleich dem 1,3-fachen des Durchmessers der Leitungen (22) des Wärmetauschers aufweist.

7. Flugzeug nach einem der vorhergehenden Ansprüche, das einen Wärmetauscher mit einer Platte (26) aufweist, die einen das zweite Fluid enthaltenden Bereich (10) und die Zuleitung (24) des ersten Fluids trennt, wobei die Platte eine Vielzahl von Öffnungen aufweist, die jeweils mit einer Leitung (22) des Wärmetauschers zusammenwirken, **dadurch gekennzeichnet, dass** sich die Enden der Leitungen (22) des Wärmetauschers oder die Öffnungen der Platte (26) in Richtung der Zufuhrleitung (24) aufweiten.

8. Flugzeug nach Anspruch 7, **dadurch gekennzeichnet, dass** der weiteste Querschnitt der Leitungen (22) des Wärmetauschers oder der Öffnungen der Platte (26) einen Durchmesser im Bereich von 1,5 D aufweist.
